Europäisches Patentamt

European Patent Office

Office européen des brevets

(19)

(11) Numéro de publication: **0 120 773**
**B1**

(12)

# FASCICULE DE BREVET EUROPÉEN

(45) Date de publication du fascicule du brevet:
18.03.87

(51) Int. Cl.⁴: **G 05 D 7/01**

(21) Numéro de dépôt: 84400558.7

(22) Date de dépôt: 20.03.84

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| les moyens de déplacement relatif étant commandé par les moyens d' actionnement en reporse au signal | 7 | 11 | 49-51 | ces moyens de déplacement relatif étant commandés par les moyens d' actionnement en reponse au signal |
| du clapet (179) | 7 | 12 | 26 | du clapet (149) |
| une première chambre (150' dont | 7 | 12 | 57-58 | une première chambre (150') dont |

| Tag der Entscheidung über die Berichtigung<br>Date of decision on rectification:<br>Date de décision portant sur modification: | ) ) ) 29.04.87 ) | Ausgabe- und Ver- öffentlichungstag:<br>Issue and publication date:<br>Date d'edition et de publication: | ) ) ) 24.06.87 ) ) ) | Patbl.Nr.) 87/26<br>EPB no:) ........<br>Bull. no:) |

**Europäisches Patentamt**

**European Patent Office**

**Office européen des brevets**

(19)

(11) Numéro de publication: **0 120 773**
**B1**

## (12) FASCICULE DE BREVET EUROPÉEN

(45) Date de publication du fascicule du brevet:
18.03.87

(21) Numéro de dépôt: **84400558.7**

(22) Date de dépôt: **20.03.84**

(51) Int. Cl.⁴: **G 05 D 7/01**

(54) **Dispositif de commande d'un débit de fluide, notamment de fluide radioactif.**

(30) Priorité: **22.03.83 FR 8304654**

(43) Date de publication de la demande:
**03.10.84 Bulletin 84/40**

(45) Mention de la délivrance du brevet:
**18.03.87 Bulletin 87/12**

(84) Etats contractants désignés:
**BE CH DE GB IT LI NL SE**

(56) Documents cité:
**GB-A-1 033 196**
**GB-A-2 060 140**
**US-A-1 744 872**
**US-A-2 908 488**

(73) Titulaire: **ELECTRICITE DE FRANCE Service National, 2, rue Louis Murat, F-75008 Paris (FR)**

(72) Inventeur: **Panet, Michel, Résidence Bernard Palissy (entrée 4), F-77210 Avon (FR)**

(74) Mandataire: **Warcoin, Jacques, Cabinet Régimbeau 26, avenue Kléber, F-75116 Paris (FR)**

## Description

La présente invention concerne un dispositif pour la commande d'un débit de fluide, destiné notamment aux circuits de fluides radioactifs des centrales nucléaires.

Dans ces circuits, l'étanchéité vers l'extérieur doit être totale. En outre, le fonctionnement de l'appareil ne doit pas être affecté par les conditions d'irradiation, de pression et de température qui résultent d'une situation accidentelle. Même en service normal, la pression du fluide à sectionner ou réguler doit pouvoir varier entre des valeurs de l'ordre de 0 à 180 bars, et sa température entre 20 et 340° C.

Jusqu'à présent, la robinetterie ayant à assurer ces fonctions de régulation et de sectionnement est constituée d'une enceinte en 2 éléments (chapeau et corps) assemblés par un montage vissé ou avec brides. Le mouvement de l'obturateur et la stabilité de sa position proviennent de l'action d'un positionneur électropneumatique fixé sur une arcade solidaire du chapeau, et comportant un servomoteur pneumatique qui provoque le déplacement axial de la tige de manoeuvre traversant le chapeau.

Les inconvénients de cette conception résultent de la discontinuité de l'enceinte au passage de la tige du robinet. A cet endroit, l'étanchéité vers l'extérieur n'est obtenue que par un presse-garnitures.

D'autre part, l'effort de frottement des garnitures sur la tige de manoeuvre gêne le fonctionnement du mécanisme de régulation puisqu'il en perturbe la contre-réaction.

Enfin, les servomoteurs et leurs accessoires (relais pneumatiques, ...) sont très sensibles aux conditions extérieures d'irradiation et de température qui provoquent leur vieillissement prématuré.

L'invention a pour but de remédier à ces inconvénients.

Plus précisément, le dispositif de l'invention est du type comprenant:

. au moins un convergent placé dans le circuit de fluide,

. des moyens de prélèvement de pression dans le convergent, la position du point de prélèvement dans le convergent étant susceptible de varier en fonction du débit ou de la pression du fluide,

. une vanne réglante comportant un obturateur mobile et des moyens pour faire varier la position de l'obturateur, ces moyens coopérant avec les moyens de prélèvement de pression de sorte que toute variation du débit ou de la pression provoque une modification de la position de l'obturateur amenant une modification antagoniste du débit de fluide pour ramener le débit et la pression vers leur valeur initiale.

Une telle structure de dispositif est notamment décrite par le GB-A-2 060 140 qui permet - comme le dispositif de l'invention - d'assurer une fonction de régulation d'un débit de fluide, en vue de maintenir la valeur de ce débit (ou, éventuellement la valeur de la pression du fluide en un point donné) sensiblement à une valeur donnée.

Le dispositif de cette antériorité présente cependant un certain nombre d'inconvénients, notamment la structure particulière de l'ensemble convergentprise de pression apporte des perturbations importantes au niveau du point de prélèvement, de sorte que la pression prélevée comporte une composante dynamique importante, prenant notamment en compte des phénomènes tourbillonnaires, de sorte que la régulation, opérée sur un paramètre rapidement fluctuant et instable, ne pourra être que très grossière, et avec un temps de réponse long pour pouvoir filtrer ces instabilités.

En second lieu, le dispositif de cette antériorité ne permet en aucune façon de régler la valeur de consigne du débit ou de la pression du fluide, celle-ci étant fixée par construction, en fonction notamment de la raideur d'un certain nombre de pièces élastiques.

Par ailleurs, comme on le verra par la suite, l'appareil de l'invention peut être également utilisé comme organe de sectionnement du débit de fluide, ce qui constitue une seconde fonction de l'appareil de l'invention, que ne permet pas d'obtenir le dispositif de l'antériorité.

A cet effet, le dispositif selon l'invention est caractérisé en ce que:

a) les moyens de prélèvement de pression sont des moyens de prélèvement de pression statique,

b) le convergent est constitué par une section du circuit de fluide en forme de tuyère (T),

c) il est prévu un dispositif d'asservissement comprenant:

. des moyens de mesure du débit ou de la pression du fluide, délivrant un signal de mesure,

. des moyens régulateurs, produisant un signal de correction fonction de l'écart constaté entre le signal de mesure et une valeur de consigne prédéterminée, réglable,

. des moyens d'actionnement, pour faire varier la position du point de prélèvement dans le convergent en réponse au signal de correction délivré par les moyens régulateurs, de sorte que la variation corrélative de la pression statique prélevée provoque une modification de la position de l'obturateur ramenant le débit ou la pression du fluide vers ladite valeur de consigne prédéterminée.

Plus particulièrement, les moyens pour faire varier la position de l'obturateur comprennent des moyens pour appliquer à l'obturateur, dans le sens de l'ouverture, un effort proportionnel à une pression statique prélevée en amont du dispositif des moyens pour lui appliquer, dans le sens de la fermeture, un effort proportionnel à la pression statique prélevée dans le convergent ainsi que des moyens pour lui appliquer un effort de compensation de la pression statique prélevée en amont.

En d'autres termes, l'invention propose d'associer au moins une tuyère à une vanne réglante. La différence de pression entre l'amont du dispositif et un point courant de la tuyère est utilisée comme effort de manoeuvre de l'obturateur, la réaction sur ce dernier étant par exemple obtenue par un système à ressort.

Ce dispositif permet un réglage de l'ouverture de la vanne dont résulte la fonction de régulation, par action d'une boucle d'asservissement autonome rétablissant la valeur de consigne du débit.

Dans un premier mode de réalisation, la tuyère comprend une pluralité de lignes de prise de pression, toutes les prises de pression situées à un même niveau du convergent communiquant avec une chambre annulaire elle-même reliée à l'une des entrées d'un distributeur multivoies.

Dans un second mode de réalisation, le dispositif comprend des moyens de déplacement relatif du convergent par rapport à la prise de pression statique, qui comprennent un accouplement magnétique de part et d'autre d'une paroi amagnétique du corps de la tuyère.

Par ailleurs, le dispositif comprend avantageusement des moyens pour, sélectivement, empêcher la transmission à l'obturateur de la pression statique prélevée dans le convergent, et pour appliquer à l'obturateur, dans le sens de la fermeture, un effort proportionnel à la pression statique prélevée en amont du dispositif et pour lui appliquer, dans le sens de l'ouverture, un effort proportionnel à la pression statique prélevée en aval du dispositif, de manière à provoquer le sectionnement des zones amont et aval de celui-ci.

Cette disposition réalise une fonction de sectionnement par simple effet autoclave, contrôlé manuellement ou à distance et appliqué à l'obturateur.

Le dispositif de régulation et de sectionnement réalisé suivant les enseignements de l'invention présente les avantages suivants:

. étanchéité vers l'extérieur très fiable (notamment du fait de l'immersion complète de l'obturateur dans le fluide radioactif), et absence de frottements parasites tige-garnitures déréglant la régulation.

. Robustesse de tenue aux conditions accidentelles par irradiation, provenant de la suppression des membranes élastomères des servomoteurs pneumatiques traditionnels, et de tenue à la température par suppression des relais pneumatiques traditionnels.

. Entretien réduit par suite de l'absence de garnitures.

. Stabilité de la régulation par l'utilisation d'un amortisseur hydraulique intégré au diffuseur (conduites calibrées).

. Possibilité d'une fermeture dans le sens amont/aval par effet autoclave.

. l'obturateur n'est soumis qu'à des pressions statiques (et non dynamiques), n'étant pas en contact direct avec le déviateur de jet: la précision et la stabilité de la régulation en sont améliorées d'autant.

D'autres caractéristiques et avantages de l'invention apparaîtront à la lecture de la description détaillée ci-dessous de deux exemples de réalisation, en regard des dessins annexés, sur lesquels:

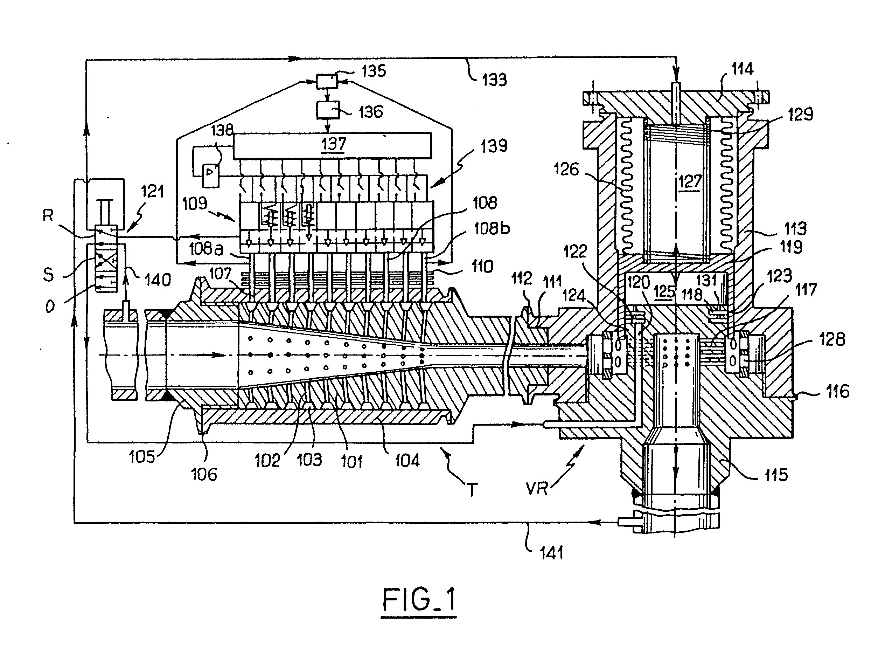

. la figure 1 représente, en coupe, un dispositif selon le premier mode de réalisation,

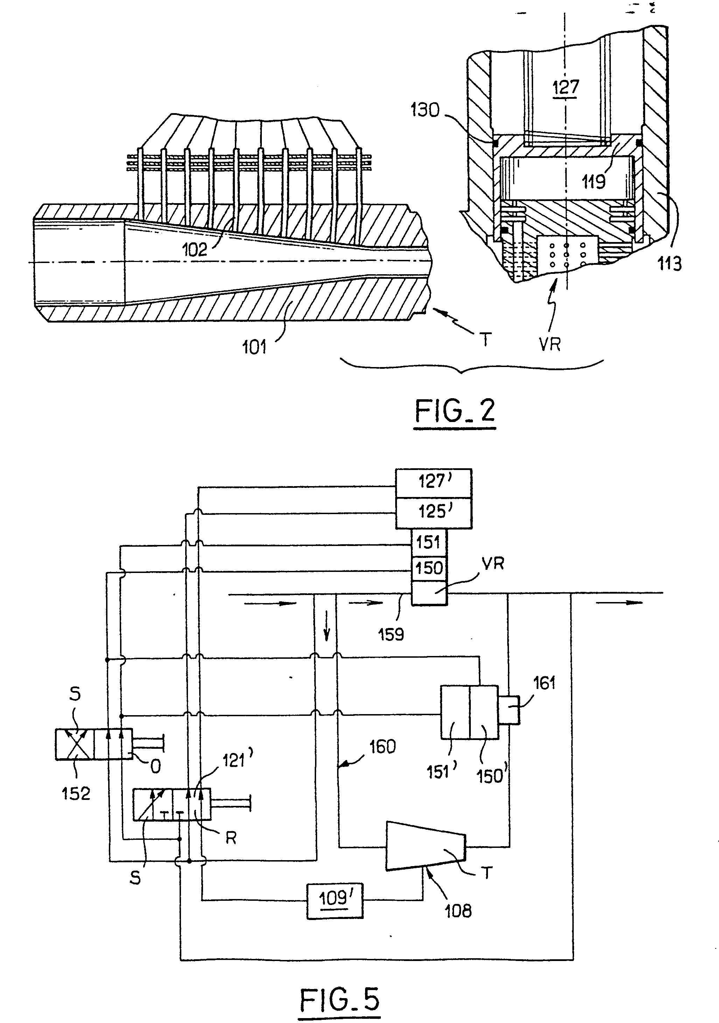

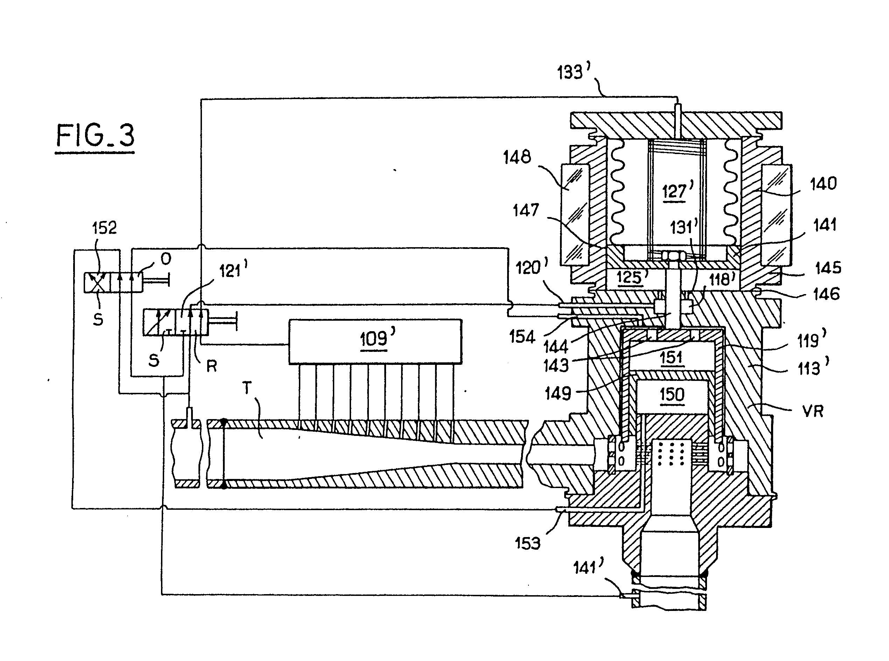

. les figures 2 et 3 illustrent un certain nombre de variantes du dispositif de la figure 1,

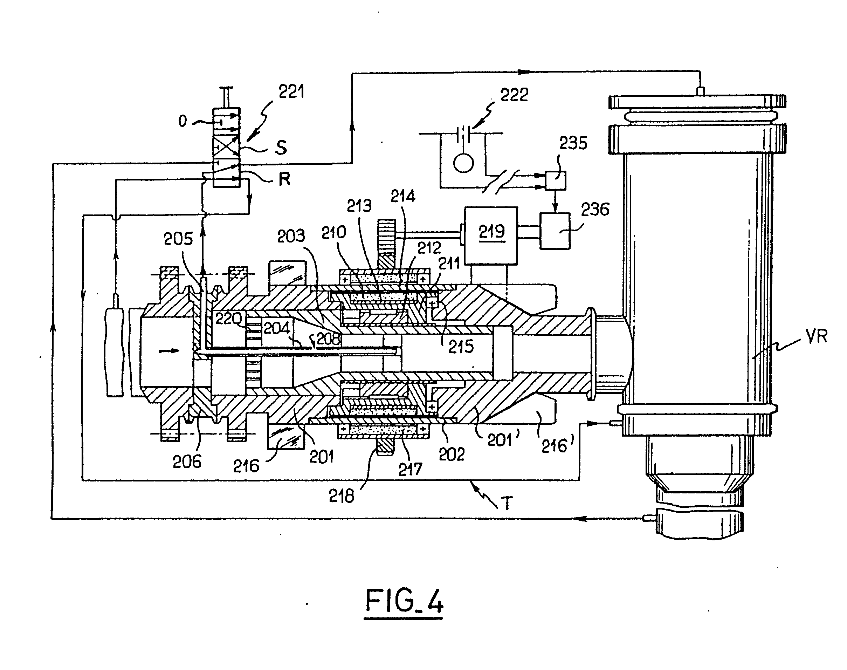

. la figure 4 représente, partiellement en coupe, un dispositif selon le deuxième mode de réalisation.

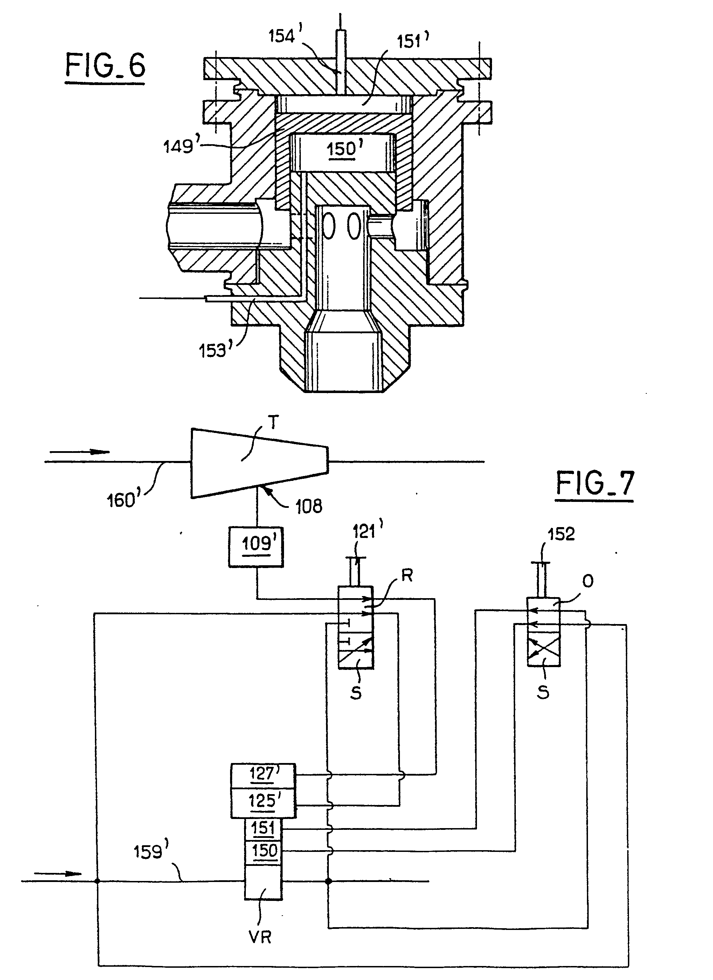

. la figure 5 représente une autre configuration de l'ensemble tuyère-vanne réglante,

. la figure 6 représente un exemple de réalisation d'un clapet de sectionnement,

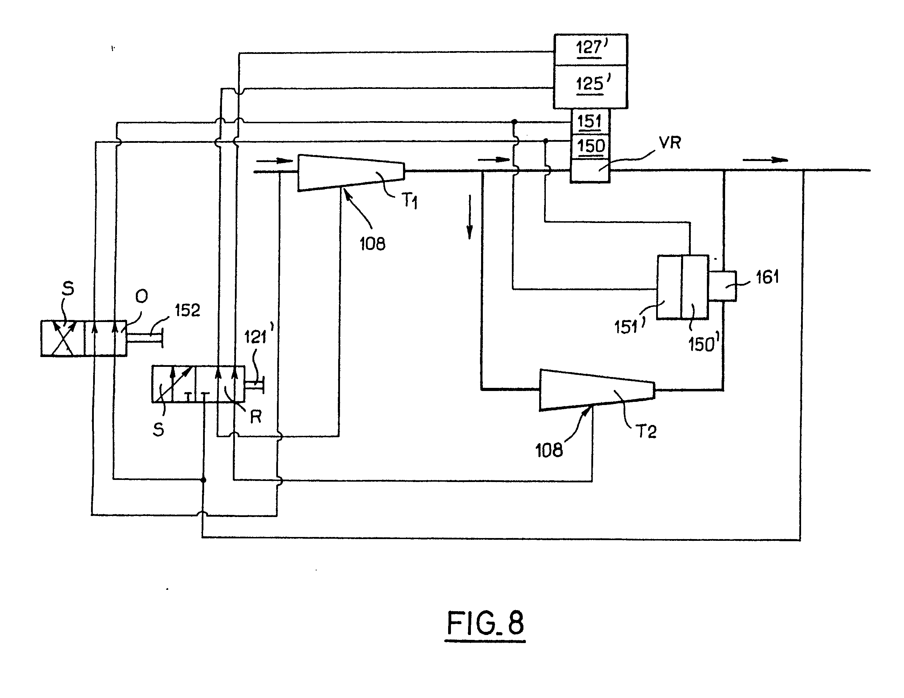

. les figures 7 et 8 représentent deux autres configurations de l'ensemble tuyère-vanne réglante.

Sur les figures, le dispositif de l'invention est constitué d'une tuyère T qui, dans la configuration représentée, est fixée à l'amont d'une vanne réglante VR du type vanne à cage. Le dispositif de l'invention est aussi constitué par d'autres configurations combinant la tuyère T et la vanne VR, qui comprennent tous montages en série, en dérivation de la tuyère T sur la vanne VR et tous montages où la tuyère T et la vanne VR appartiennent à des circuits hydrauliques distincts.

Selon le premier mode de réalisation, représenté figure 1, la tuyère T se compose d'un convergent 101 équipé de conduits 102 de prise de pression répartis régulièrement dans les sens axial et circonférentiel, et qui débouchent dans des chambres annulaires 103.

L'étanchéité entre ces chambres est obtenue par un manchon 104 de forme cylindrique. Une pression de contact élevée du manchon 104 sur le convergent 101 garantit ladite étanchéité. Elle peut être obtenue par une technique de montage particulière du manchon 104 porté à haute température au moment de son emboîtement sur le convergent 101 fortement refroidi.

Une pièce d'extrémité 105 vissée dans le manchon 104 permet le raccordement de la tuyauterie amont sur la tuyère. L'étanchéité entre les pièces 104 et 105 est obtenue par exemple par soudure de lèvres usinées 106.

Le manchon 104 est traversé de conduits radiaux 107 qui débouchent d'un côté dans chaque chambre annulaire 103 et de l'autre dans une conduite de piquage propre 108 elle-même reliée à l'une des entrées d'un distributeur 109. Un échangeur thermique 110 à ailettes et caloduc est placé sur les conduites de piquage 108 évitant l'échauffement du distributeur 109.

La tuyère T est fixée sur la vanne réglante VR par un assemblage vissé 111 ou à brides. L'étanchéité de cette liaison est obtenue par soudure des lèvres usinées 112.

La vanne réglante comprend une enceinte totalement étanche vers l'extérieur, constituée d'un corps 113 sur lequel sont fixés un chapeau 114 et un diffuseur 115. L'étanchéité entre ces éléments est obtenue par soudure de lèvres usinées 116 et leur assemblage est réalisé par des boulons, ou par vissage.

Le diffuseur porte une cage 117, de préférence pour l'association de la tuyère T à la vanne réglante VR du type montage en série, dont les orifices ont une section qui diminue quand on se déplace suivant l'axe de la cage dans la direction opposée à l'écoulement; cette disposition, qui est à l'inverse de celle rencontrée le plus souvent dans les vannes réglantes classiques, permet d'obtenir pour cette configuration une caractéristique convexe d'écoulement de la vanne qui assure, compte tenu de la caractéristique linéaire du ressort, un équilibre stable autour du point de consigne fixé par le système de régulation.

Une ou plusieurs rainures annulaires 118 sont réalisées à l'extrémité du diffuseur 115 emboîtée dans un obturateur 119. Un conduit 120 traverse le diffuseur 115 et débouche vers l'extérieur sur une sortie d'un distributeur 121 à 5 orifices et 3 positions (position R: régulation; position S: sectionnement; position O: ouverture), et vers l'intérieur dans la rainure annulaire inférieure 122. Une seconde cage 128 est emboîtée entre le corps 113 et le diffuseur 115 de manière à diminuer les efforts produits par le jet sortant de la tuyère sur l'obturateur, et ayant notamment tendance à solliciter radialement celui-ci, ainsi que la cavitation. L'obturateur 119 est guidé axialement par le diffuseur 115, lui-même parfaitement centré par rapport au corps 113. Les surfaces en frottement de l'ajustement fonctionnel 123 ont un revêtement dur pouvant être un stellite.

Un segment 124 peut être placé sous la rainure 122 pour améliorer l'effet de piston du système diffuseur-obturateur. L'obturateur 119 délimite avec le diffuseur 115 une première chambre 125 où règne la pression transmise par le conduit 120 grâce à des orifices calibrés 131.

Un soufflet 126, soudé à une extrémité sur le chapeau 114 et à l'autre sur l'obturateur 119 délimite une seconde chambre 127 communiquant soit avec le distributeur 109 et avec la conduite de piquage 108 choisie par le distributeur 109 (fonction régulation: position R du distributeur 121) soit avec une conduite 140 de prélèvement de pression amont (sectionnement: position S).

Un système de ressort 129 tend à rappeler l'obturateur 119 sur sa position de fermeture.

Le distributeur 109 est composé d'une série d'électrovannes à une voie de passage alimentée par chaque conduite 108. La boucle de régulation se compose dd'un capteur 135 qui convertit l'écart de pression de deux points situés à l'amont et à l'aval de la tuyère (par exemple les conduites de piquage extrêmes 108a et 108b) en un courant proportionnel à cet écart. Un régulateur analogique 136 à affichage digital est réglé sur la valeur de consigne de l'écart précité. Cette consigne est établie en tenant compte de la caractéristique de débit de la tuyère.

En cas de variation du débit, la pression différentielle observée par le capteur 135 s'écarte de la valeur de consigne, et le régulateur 136 produit une excitation en courant, proportionnelle à la dérive, transmise à un microprocesseur 137 programmé en automate et dont les fonctions logiques permettent une scrutation temporisée du distributeur 109 en ouvrant ou fermant les contacts à relais 139, via un amplificateur 138 des microcourants du microprocesseur 137.

Il en résulte donc, par suite des différentes pressions transmises dans la chambre 127 par la conduite 133 (reliant, via l'électrovanne 121, la chambre 127 à la conduite de piquage sélectionnée par le microprocesseur 137) un mouvement de l'obturateur 119 jusqu'à ce que le débit traversant l'appareil retrouve la valeur qui correspond à la consigne affichée par le régulateur 136.

La temporisation de la scrutation peut dans certains cas provoquer l'établissement d'un débit périodique oscillant autour de la valeur du débit de consigne, chaque fois que la position de l'obturateur pour le débit de consigne nécessiterait de transmettre à la chambre 127 une pression intermédiaire entre celles régnant dans deux chambres annulaires 103 adjacentes.

En variante, il est possible d'asservir le fonctionnement de la vanne non pas sur le débit du fluide, mais sur sa pression en un point déterminé. Le capteur de pression 135 n'est, dans ce cas, pas un capteur de pression différentielle entre l'amont et l'aval du convergent (pression différentielle représentative du débit de fluide), mais un capteur de pression absolue mesurant la pression statique en un point unique du circuit.

La fermeture de la vanne par effet autoclave est obtenue par commande manuelle où à distance du distributeur 121 (position S) qui permute les pressions appliquées aux chambres 125 et 127 et isole le distributeur 109 et la boucle d'asservissement décrite cidessus. La seconde chambre 127 est soumise à la haute pression régnant en amont (amenée par la conduite 140), et la première chambre 125 à la basse pression régnant en aval du dispositif (amenée par une conduite 141).

L'ouverture de la vanne est facilitée par un passage à la position O du distributeur 121, qui permute les pressions des chambres 125 et 127.

La figure 2 illustre un certain nombre de variantes de réalisation, applicables indépendamment les unes des autres: tout d'abord, la tuyère 101 est monobloc; elle porte une seule ligne de conduits 102 de prise de pression alignés selon l'axe de la tuyère au lieu d'une pluralité de lignes régulièrement réparties dans un plan axial. Par ailleurs, la chambre 127 alimentée par le distributeur et délimitée par l'obturateur 119 et le corps 113, a son étanchéité obtenue par un joint segment 130.

La figure 3 représente une autre variante, où la vanne réglante est équipée d'une motorisation hydraulique fixée sur le corps 113' par un assemblage à brides 145 avec soudure des lèvres usinées 146.

Un piston 141 délimite les deux chambres 125' et 127'. La chambre 125' refoit la pression du circuit de pilotage par le canal 120' débouchant à travers le corps 113' dans la rainure annulaire 118', mise en communication avec la chambre par les orifices calibrés 131' qui réalisent un effet d'amortissement.

Un clapet de sectionnement 149 délimite deux chambres 150 et 151.

La fermeture de la vanne par effet autoclave est obtenue par commande manuelle ou à distance du premier distributeur 121' (position S) qui isole le distributeur 109' et la boucle d'asservissement, et par commande du second distributeur 152 (position S) qui permute les pressions appliquées aux chambres 150 et 151. La chambre 151 est soumise à la haute pression régnant en amont du dispositif (amenée par la conduite 154), et la chambre 150 à la basse pression régnant à l'aval du dispositif (amenée par la conduite 153).

L'ouverture de la vanne est obtenue par commande manuelle ou à distance du distributeur 152 (position O) qui permute les pressions des chambres 150 et 151.

La régulation de débit est obtenue par commande manuelle ou à distance du distributeur 121' (position R) qui transmet à la chambre 127' la pression sélectionnée par le distributeur 109', sans modifier la pression de la chambre 125' prise à l'amont du dispositif.

Un revêtement dur 147 peut être apposé sur les surfaces en frottement du piston 141 et du cylindre 140 sur la hauteur de la course du piston.

Des ailettes de refroidissement 148 et un caloduc sont fixés sur le cylindre 140 permettant d'abaisser la température de la motorisation hydraulique.

L'obturateur 119' est connecté au piston 141 par une tige de manoeuvre 144 de préférence articulée à chaque extrémité sur l'obturateur et le piston par des assemblages appropriés.

Un canal 143 traverse le fond de l'obturateur 119' permettant l'égalité des pressions de part et d'autre de l'obturateur.

Cette structure rend l'obturateur totalement insensible à la pression dynamique du fluide, même en cas d'usure des surfaces de contact obturateur-diffuseur.

Sur la figure 4 est représenté un second mode de réalisation.

Le corps de la tuyère T y est constitué par deux éléments de guidage 201, 201' soudés à une chemise 202. Le convergent 203 coulisse dans les éléments de guidage 201, 201' par rapport auxquels un tube 204 est fixe et coaxial. Un conduit 205, traversant une pièce 206 nécessaire au montage du tube 204, transmet la pression de l'orifice 208 à la vanne réglante VR (identique à celle du premier mode de réalisation) quand le distributeur 221 le permet. Un redresseur d'écoulement 220 peut être fixé à l'entrée du convergent.

Le dispositif permettant le déplacement du convergent est entièrement compris dans le corps de la tuyère. Il comprend une partie magnétique et un mécanisme de transformation de mouvement.

La partie magnétique, intérieure à la tuyère, permet l'accouplement de celle-ci à la commande extérieure. Elle est formée d'aimants permanents 210 au cobalt et à un métal de terres rares solidaires d'un élément cylindrique 211 qui transmet le mouvement de rotation à une vis à rouleaux 212.

Ces aimants sont fixés à un élément cylindrique en acier doux 213 qui canalise le champ magnétique. Ils sont protégés du fluide ambiant par une enveloppe mince 214 d'acier amagnétique. L'entrefer est la paroi 202 de l'enceinte (un acier dopé au bore présente des propriétés magnétiques et mécaniques avantageuses permettant des fuites magnétiques négligeables dans cet entrefer).

La rotation de l'ensemble aimants-vis à rouleaux est guidée par appui de l'élément 211 sur l'élément 201', une butée à bille 215 maintenant l'ensemble axialement.

Un système d'ailettes 216, 216' est placé sur les éléments 201, 201' du corps de la tuyère; elles peuvent porter un caloduc de façon à limiter la température des aimants.

L'effort externe transmis au travers de la paroi est produit par un ensemble d'aimants tournants 217 extérieurs à l'enceinte. Les aimants extérieurs sont placés sur une roue dentée 218 qui est entraînée par un moteur pas à pas 219.

La boucle de régulation se compose d'un capteur 235 qui convertit l'écart des pressions prises de part et d'autre d'un débitmètre 222, monté sur la tuyauterie en amont de la tuyère, en courant proportionnel à cet écart. Un régulateur analogique avec positionneur de vanne incorporé 236 est réglé sur la valeur de consigne de l'écart précité. Cette consigne est établie à partir de la courbe d'étalonnage du débitmètre précité (le débitmètre peut être remplacé par un manomètre, si l'on souhaite un asservissement de pression plutôt que de débit).

En cas de variation du débit (ou de la pression) du fluide, la dérive de l'écart de pression du débitmètre (ou de la pression du manomètre) observée par le capteur 235 provoque la mise en rotation, dans un sens fonction du signe de la dérive, du moteur 219 par suite de l'action du régulateur 236. Il en résulte une variation de la pression dans l'orifice 208 due au déplacement du convergent 203; cette variation de pression est transmise à la chambre supérieure de la vanne réglante et provoque le déplacement de l'obturateur jusqu'au retour du débit (ou de la pression) de consigne.

Sur la figure 5 est représentée une autre configuration combinant la vanne réglante VR et la tuyère T: la tuyère T est placée sur un circuit 160 qui réalise une dérivation du circuit principal 159 porteur de la vanne réglante VR. Un clapet de sectionnement 161 piloté par le distributeur 152 est monté sur le circuit dérivé 160 de façon à assurer la fonction de sectionnement du dispositif de l'invention.

La figure 6 représente un exemple de réalisation de ce clapet 161 pouvant fonctionner en utilisant toute chute de pression hydraulique, et en particulier la chute qui lui est propre, par l'intermédiaire des volumes clos 150' et 151' dont l'augmentation provoque respectivement le déplacement du clapet 149' dans le sens de l'ouverture et de la fermeture, respectivement. Le laminage du débit alimentant les volumes clos 150' et 151' est obtenu par calibrage de la section d'écoule ment des canaux 153' et 154' de façon à provoquer l'amortissement du mouvement du clapet 149'.

Les fonctions de régulation et de sectionnement sont obtenues par pilotage des pressions de chambres 125', 127', 151, 150, 151', 150' dans la séquence et par les moyens déjà décrits et relatifs à la figure 3.

Sur la figure 7 est représentée une autre configuration combinant la vanne réglante VR et la tuyère T. La tuyère T est placée sur un circuit 160' distinct du circuit 159' qui porte la vanne réglante VR.

Les fonctions de régulation et de sectionnement sont obtenues par pilotage des pressions des chambres 125', 127', 151, 150 dans la séquence et par les moyens déjà décrits et relatifs à la figure n° 3.

Cette configuration permet, si cette fonction est demandée, d'établir un asservissement entre les débits des circuits distincts 159' et 160'. Il permet également d'utiliser deux circuits 159' et 160' parcourus respectivement par des fluides à l'état gazeux et liquide.

Sur la figure 8 est représentée une autre configuration combinant la vanne réglante VR avec une pluralité de tuyères TI et T2 disposées respectivement en série et en dérivation de la vanne réglante VR.

Cette configuration permet de s'affranchir du système de ressort 129 déjà décrit et relatif aux dispositions de la figure 1.

Les fonctions de régulation et de sectionnement sont obtenues par pilotage des pressions des chambres 125', 127', 151, 150, 151', 150' dans la séquence et par les moyens déjà décrits et relatifs à la figure 3, à l'exception de la chambre 125' mise en communication avec la tuyère T1. La chambre 127' est en communication avec la tuyère T2 en fonction de régulation et avec la pression aval du dispositif en fonction de sectionnement.

**Revendications**

1. Dispositif de commande d'un débit de fluide, comprenant:
. au moins un convergent (101; 203) placé dans le circuit de fluide,
. des moyens (102, 103, 108; 208) de prélèvement de pression dans le convergent, la position du point de prélèvement dans le convergent étant susceptible de varier en fonction du débit ou de la pression du fluide,
. une vanne réglante (VR) comportant un obturateur (119) mobile et des moyens pour faire varier la position de l'obturateur, ces moyens coopérant avec les moyens de prélèvement de pression de sorte que toute variation du débit ou de la pression provoque une modification de la position de l'obturateur amenant une modification antagoniste du débit de fluide pour ramener le débit et la pression vers leur valeur initiale,
caractérisé en ce que:
a) les moyens de prélèvement de pression sont des moyens de prélèvement de pression statique,
b) le convergent est constitué par une section du circuit de fluide en forme de tuyère (T),
c) il est prévu un dispositif d'asservissement comprenant:
. des moyens (135; 222, 235) de mesure du débit ou de la pression du fluide, délivrant un signal de mesure,
. des moyens régulateurs (136; 236), produisant un signal de correction fonction de l'écart constaté entre le signal de mesure et une valeur de consigne prédéterminée, réglable,
. des moyens d'actionnement (109, 136-139; 210-219), pour faire varier la position du point de prélèvement dans le convergent en réponse au signal de correction délivré par les moyens régulateurs, de sorte que la variation corrélative de la pression statique prélevée provoque une modification de la position de l'obturateur ramenant le débit ou la pression du fluide vers ladite valeur de consigne prédéterminée.

2. Dispositif selon la revendication 1, caractérisé en ce que les moyens pour faire varier la position de l'obturateur comprennent des moyens (120; 109, 133; 129) pour appliquer simultanement à l'obturateur:
- dans le sens de l'ouverture, un effort proportonnel à une pression statique prélevée en amont du dispositif,
- dans le sens de la fermeture, un effort proportionnel à la pression statique prélevée dans le convergent, ainsi que
- un effort de compensation de l'effort proportionnel à la pression statique prélevée en amont.

3. Dispositif selon la revendication 2, caractérisé en ce qu'il comporte en outre des moyens (121, 221) pour, sélectivement, empêcher la transmission à l'obturateur de la pression statique prélevée dans le convergent, et pour appliquer simultanément à l'obturateur
- dans le sens de la fermeture, un effort proportionnel à la pression statique prélevée en amont du dispositif, et
- dans le sens de l'ouverture, un effort proportionnel à la pression statique prélevée en aval du dispositif, de manière à provoquer le sectionnement des zones amont et aval de celui-ci.

4. Dispositif selon l'une des revendications 2 et 3, caractérisé en ce que la vanne réglante comprend, à l'intérieur d'une enceinte étanche (113, 114):

. un diffuseur (115) pourvu d'une cage (117) munie, dans plusieurs plans étagés axialement, d'une pluralité d'orifices radiaux;

. un obturateur (119) de ce diffuseur permettant, par un mouvement axial, de couvrir un plus ou moins grand nombre d'orifices de la cage, de manière à faire varier le débit du fluide traversant le diffuseur;

. des moyens (120, 140) pour relier à la prise de pression statique amont une première chambre (125) dont l'augmentation de volume se fait dans le sens de l'ouverture;

. des moyens (109, 133) pour relier à la prise de pression statique variable du convergent une deuxième chambre (127) dont l'augmentation de volume se fait dans le sens de la fermeture.

5. Dispositif selon l'une des revendications 2 à 4, caractérisé en ce que les moyens pour appliquer à l'obturateur un effort de compensation comprennent un ressort (129) exerçant un effort transmis à l'obturateur dans le sens de la fermeture.

6. Dispositif selon l'une des revendications 4 et 5, caractérisé en ce que les moyens pour relier à la prise de pression statique amont la première chambre comprennent, en outre, au moins un orifice calibré (131).

7. Dispositif selon l'une des revendications 1 à 6, caractérisé en ce que la tuyère comprend au moins une ligne de prises de pression périphériques (102) étagées le long du convergent (101), et reliées chacune à l'entrée d'un distributeur multivoies (109) commandé par les moyens d'actionnement en reponse au signal de correction délivré par les moyens régulateurs.

8. Dispositif selon la revendication 7, caractérisé en ce que la tuyère comprend une pluralité de lignes de prise de pression, toutes les prises de pression situées à un même niveau du convergent communiquant avec une chambre annulaire (103) elle-même reliée à l'une des entrées du distributeur multivoies.

9. Dispositif selon l'une des revendications 1 à 6, caractérisé en ce qu'il comprend des moyens de déplacement relatif, à l'intérieur du corps (201, 202, 201') de la tuyère, du convergent (203) par rapport à une prise de pression statique unique (208), les moyens de déplacement relatif étant commandé par les moyens d'actionnement en reporse au signal de correction délivré par les moyens régulateurs.

10. Dispositif selon la revendication 9, caractérisé en ce que les moyens de déplacement relatif du convergent et de la prise de pression statique comprennent un accouplement magnétique de part et d'autre d'une paroi amagnétique (202) du corps de la tuyère.

11. Dispositif selon la revendication 10, caractérisé en ce que l'accouplement magnétique comprend:

. à l'extérieur du corps de la tuyère, un moteur (219) d'entraînement en rotation d'au moins un premier aimant permanent (217),

. à l'intérieur du corps de la tuyère, au moins un second aimant permanent (210), coopérant avec le premier et entraînant un mécanisme (212) de transformation du mouvement de rotation en un mouvement de translation axiale relative de la prise de pression et du convergent.

12. Dispositif selon l'une des revendications 3 à 11, caractérisé en ce que la vanne réglante comprend, à l'intérieur d'une enceinte étanche (113):

. un clapet de sectionnement (149), distinct de l'obturateur (119), dont le déplacement provoque l'ouverture et la fermeture de la vanne réglante;

. des moyens (153) pour relier à la prise de pression statique amont du dispositif une première chambre (150) dont l'augmentation de volume provoque un mouvement du clapet (149) dans le sens de l'ouverture;

. des moyens (133') pour relier à la prise de pression statique variable du convergent une seconde chambre (127') dont l'augmentation de volume se fait dans le sens de la fermeture,

. des moyens (154) pour relier à une prise de pression statique aval du dispositif une troisième chambre (151) dont l'augmentation de volume provoque un mouvement du clapet (179) dans le sens de la fermeture;

ainsi que, à l'extérieur de ladite enceinte,

. des moyens (152) pour permuter les pressions statiques des première et troisième chambres (150, 151);

. des moyens (121') pour sélectivement empêcher la transmission à la seconde chambre (127') de la pression statique prélevée dans le convergent, pour appliquer à l'obturateur, dans le sens de l'ouverture, un effort proportionnel à la pression statique prélevée en amont du dispositif, et pour lui appliquer, dans le sens de la fermeture, un effort proportionnel à la pression statique prélevée en aval du dispositif, de manière que l'obturateur ne couvre qu'une partie des orifices de la cage quand le clapet (149) ferme la vanne réglante.

13. Dispositif selon l'une des revendications 4 à 12, où une tuyère unique est montée en série avec la vanne réglante, caractérisé en ce que les orifices radiaux de la cage ont une section décroissante en se déplaçant suivant l'axe de la cage dans la direction opposée à l'écoulement.

14. Dispositif selon la revendication 1, caractérisé en ce que l'oburateur de la vanne réglante (VR) forme clapet (149') de sectionnement dont le déplacement provoque l'ouverture et la fermeture de la vanne réglante, et en ce qu'il est prévu en outre:

. des moyens pour relier à une prise de pression statique en amont du dispositif une première chambre (150' dont l'augmentation de volume provoque un mouvement du clapet dans le sens de l'ouverture,

. des movens pour relier à une prise de pression statique en aval du dispositif une seconde chambre (151') dont l'augmentation de volume provoque un mouvement du clapet dans le sens de la fermeture,

. des moyens pour permuter les pressions statiques des première et seconde chambres,

. des moyens pour amortir le mouvement du clapet (149') par laminage du débit du fluide d'alimentation des chambres (150', 151'), résultant de la calibration des canaux d'alimentation (153', 154') de celles-ci.

## Patentansprüche

1. Steuervorrichtung für einen Fluiddurchsatz mit:

- einem konvergierenden Kanalabschnitt (101; 203) im Fluidkreislauf,

- Mitteln (102, 103, 108; 208) zum Abgreifen des Druckes im konvergierenden Kanalabschnitt, wobei die Lage der Abgriffsstelle im konvergierenden Kanalabschnitt in Abhängigkeit vom Fluiddurchsatz oder Fluiddruck variieren kann, einem Regelventil (VR) mit einem beweglichen Verschlußstück (119) und Mitteln zum Variieren der Position des Verschlußstückes, welche mit den Mitteln zum Abgreifen des Druckes derart zusammenwirken, daß jegliche Veränderung des Durchsatzes oder des Druckes eine Veränderung der Stellung des Verschlußstückes hervorruft, die eine entgegenwirkende Veränderung des Fluiddurchsatzes herbeiführt, um den Durchsatz und den Druck auf den ursprünglichen Wert zurückzuführen,

dadurch gekennzeichnet, daß

a) die Mittel zum Abgreifen des Druckes Mittel zum Abgreifen des statischen Druckes sind,

b) der konvergierende Kanalabschnitt von einem Abschnitt des Fluidkreislaufs in Form einer Düse (T) gebildet ist,

c) eine Regelvorrichtung vorgesehen ist, welche umfaßt:

- Mittel (135; 222, 235) zum Messen des Fluiddurchsatzes oder -druckes, welche ein Meßsignal abgeben,

- Regelmittel (136; 236), welche ein Korrektursignal in Funktion der festgestellten Abweichung zwischen dem Meßsignal und einem vorbestimmten regelbaren Sollwert erzeugen,

- Stellmittel (109, 136-139; 210-219), um die Lage der Abgreifstelle im konvergierenden Kanalabschnitt auf ein von den Regelmitteln abgegebenes Korrektursignal zu verändern derart, daß die Änderung bezüglich des abgegriffenen statischen Druckes eine Änderung der Position des Verschlußstückes im Sinne einer Zurücknahme des Durchsatzes oder des Fluiddruckes auf den vorbestimmten Sollwert bewirkt.

2. Vorrichtung nach Anspruch 1, dadurch gekennzeichnet, daß die Mittel zum Verändern der Position des Verschlußstückes Mittel (120; 109, 133; 129) zum gleichzeitigen Ausüben auf das Verschlußstück:

- einer Kraft im Öffnungssinne proportional zu einem stromaufwärts von der Vorrichtung abgegriffenen statischen Druck,

- einer Kraft im Schließsinne proportional zum in dem konvergierenden Kanalabschnitt abgegriffenen statischen Druck und

- einer Kompensationskraft der zum stromaufwärts abgegriffenen statischen Druck proportionalen Kraft aufweist.

3. Vorrichtung nach Anspruch 2, dadurch gekennzeichnet, daß sie ferner Mittel (121, 221) zum wahlweisen Verhindern der Übertragung zum Verschlußstück des im konvergierenden Kanalabschnitt abgegriffenen statischen Druckes und zum gleichzeitigen Ausüben auf das Verschlußstuck:

- einer zum stromaufwärts von der Vorrichtung abgegriffenen statischen Druck proportionalen Kraft im Schließsinne und

- einer zum stromabwärts von der Vorrichtung angegriffenen statischen Druck proportionalen Kraft im Öffnungssinne, um die Trennung der Zonen stromaufwärts und stromabwärts von der Vorrichtung herbeizuführen.

4. Vorrichtung nach einem der Ansprüche 2 und 3, dadurch gekennzeichnet, daß das Regelventil innerhalb einer dichten Umschliessung (113, 114) umfaßt:

- einen Diffusor (115) mit einem Käfig (117), der in mehreren axial verschobenen Ebenen mehrere radiale Öffnungen aufweist;

- ein Verschlußstück (119) dieses Diffusors, welches über eine Axialbewegung das Abdecken einer größeren oder kleineren Anzahl der Öffnungen des Käfigs ermöglicht derart, daß der Fluiddurchsatz durch den Diffusor variiert werden kann,;

- Mittel (120, 140) zum Anschließen an den Abgriff des statischen Druckes stromaufwärts einer ersten Kammer (125), deren Volumenvergrößerung im Öffnungssinn stattfindet;

- Mittel (109, 133) zum Anschließen an den variablen Abgriff des statischen Druckes im konvergenten Kanalabschnitt einer zweiten Kammer (127), deren Volumenvergrößerung im Schließsinne stattfindet.

5. Vorrichtung nach einem der Ansprüche 2 bis 4, dadurch gekennzeichnet, daß die Mittel zum Ausüben einer Kompensationskraft auf das Verschlußstück eine Feder (129) umfassen, welche eine Kraft im Schließsinne auf das Verschlußstück überträgt.

6. Vorrichtung nach einem der Ansprüche 4 oder 5, dadurch gekennzeichnet, daß die Mittel zum Anschließen der ersten Kammer an den stromaufwärts gelegenen Abgriff des statischen Druckes außerdem eine kalibrierte Öffnung (131) umfassen.

7. Vorrichtung nach einem der Ansprüche 1 bis 6, dadurch gekennzeichnet, daß die Düse mindestens eine Leitung von Umfangsdruckabgriffen (102) umfaßt, die längs des konvergierenden Kanalstückes (101) angeordnet und je mit dem Eingang eines Mehrweg-Verteilers (109) verbunden sind, welcher durch die Stellmittel auf ein von den Regelmitteln abgegebenes Korrectursignal hin gesteuert wird.

8. Vorrichtung nach Anspruch 7, dadurch gekennzeichnet, daß die Düse mehrere Druckabgreifleitungen umfaßt, wobei auf gleichem Niveau des konvergierenden Kanalstückes gelegene Druckabgriffe je mit einer Ringkammer (103) kommunizieren, die selbst an einen der Eingänge des Mehrwegverteilers angeschlossen ist.

9. Vorrichtung nach einem der Ansprüche 1 bis 6, dadurch gekennzeichnet, daß sie Mittel zur relativen Verlagerung des konvergierenden Kanalstückes (203) zum Inneren des Düsenkörpers (201, 202, 201') bezüglich eines einzigen Abgriffs (208) des statischen Druckes aufweist, wobei die Verlagerungsmittel von den Stellmitteln auf ein Korrectursignal betätigt werden, welches von den Regelmitteln abgegeben wird.

10. Vorrichtung nach Anspruch 9, dadurch gekennzeichnet, daß die Mittel zur Verlagerung des konvergierenden Kanalabschnitts relativ zum Abgriff des statischen Druckes eine Magnetkupplung umfassen, die eine anmagnetische Wand (202) des Düsenkörpers überbrückt.

11. Vorrichtung nach Anspruch 10, dadurch gekennzeichnet, daß die Magnetkupplung umfaßt:
- außerhalb des Düsenkörpers einen Motor (219) zum Drehantrieb mindestens eines ersten Permanentmagneten (217),
- innerhalb des Düsenkörpers mindestens einen zweiten Permanentmagneten (210), der mit dem ersten Permanentmagnet zusammenwirkt und einen Umformmechanismus (212) zum Wandeln der Drehbewegung in eine axiale Translationsbewegung des konvergierenden Kanalstückes relativ zum Druckabgriff antreibt.

12. Vorrichtung nach einem der Ansprüche 3 bis 11, dadurch gekennzeichnet, daß das Regelventil innerhalb einer dichten Umschließung (113) umfaßt:
- ein vom Verschlußstück (119) gesondertes Trennglied (149), dessen Verlagerung Öffnen und Schließen des Regelventils bewirkt;
- Mittel (153) zum Anschließen an den stromaufwärtigen Abgriff des statischen Druckes einer ersten Kammer (150), deren Volumenvergrößerung eine Bewegung des Trenngliedes (149) im Öffnungssinne bewirkt;
- Mittel (133') zum Anschließen an den variablen Abgriff des statischen Druckes des konvengierenden Kanalstücks einer zweiten Kammer (127'), deren Volumenvergrößerung im Schließeinne stattfindet;
- Mittel (154) zum Anschließen an einen stromabwärtigen Abgriff des statischen Druckes der Vorrichtung einer dritten Kammer (151), deren Volumenvergrößerung eine Bewegung des Trenngliedes (149) im Schließsinne erzeugt;
  sowie außerhalb der genannten Umschließung,
- Mittel (152) zum Permutieren der statischen Drücke in den ersten und dritten Kammern (150, 151);
- Mittel (121') zum wahlweisen Verhindern der Übertragung in die zweite Kammer (127') des im konvergenten Kanalstück abgegriffen statischen Druckes, um auf das Verschlußstück im Öffnungssinne eine zum stromaufwärts von der Vorrichtung abgegriffenen statischen Druck proportionale Kraft auszuüben und um im Schließsinne eine dem stromabwärts von der Vorrichtung abgegriffenen statischen Druck proportionale Kraft auszuüben derart, daß das Verschlußstück nur einen Teil der Öffnungen des Käfigs abdeckt, wenn das Trennteil (149) das Regelventil schließt.

13. Vorrichtung nach einem der Ansprüche 4 bis 12, bei der eine einzige Düse in Reihe mit dem Regelventil angeordnet ist, dadurch gekennzeichnet, daß die radialen Öffnungen des Käfigs mit der Verlagerung bezüglich der Achse des Käfigs in Richtung entgegengesetzt zur Ausflußrichtung abnehmenden Querschnitt haben.

14. Vorrichtung nach Anspruch 1, dadurch gekennzeichnet, daß das Verschlußstück des Regelventils (VR) ein Trennglied (149') bildet, dessen Verlagerung Öffnen und Schließen des Regelventils erzeugt, und daß außerdem vorgesehen sind:.
- Mittel zum Anschließen an einen stromaufwärtigen Abgriff des statischen Druckes der Vorrichtung einer ersten Kammer (150'), deren Volumenvergrößerung eine Bewegung des Trenngliedee im Öffnungssinne erzeugt,
- Mittel zum Anschließen an einen stromabwärtigen Abgriff des statischen Druckes einer zweiten Kammer (151'), deren Volumenvergrößerung eine Bewegung der Klappe im Schließsinne erzeugt,
- Mittel zum Permutieren der statischen Drücke in den ersten und zweiten Kammern,
- Mittel zum Dämpfen der Bewegung des Trenngliedes (149') durch Drosseln des Durchsatzes an Speisefluid für die Kammern (150', 151') aufgrund der Kalibrierung der Speisekanäle (153', 154') derselben.

## Claims

1. Fluid flow control apparatus comprising:
at least one convergent (101; 203) located in the fluid circuit,
means (102, 103, 108; 208) for sampling the pressure in the convergent, the position of the sampling point in the convergent being variable as a function of the flow or pressure of the fluid,
a regulating valve (VR) possessing a movable shutter (119) and means for varying the position of the 0 shutter, these means interacting with the pressure-sampling means, so that any variation in the flow or in the pressure causes a change in the position of the shutter which brings about an opposing change in the fluid flow in order to

return the flow and the pressure to their initial values,

characterized in that:

a) the pressure-sampling means are means for sampling the static pressure,

b) the convergent consists of a section of the fluid circuit in the form of a nozzle (T),

c) there is provided a control device comprising:

means (135; 222, 235) for measuring the flow or the pressure of the fluid, which supply a measuring signal,

regulating means (136; 236) which generate a correction signal as a function of the difference detected between the measuring signal and an adjustable predetermined nominal value,

actuation means (109, 136-139; 210-219) for varying the position of the sampling point in the convergent in response to the correction signal applied by the regulating means, so that the correlative variation in the static pressure sampled causes a change in the position of the shutter which returns the flow or the pressure of the fluid to the said predetermined nominal value.

2. Apparatus according to Claim 1, characterized in that the means for varying the position of the shutter comprise means (120; 109, 133; 129) for exerting simultaneously on the shutter:

in the opening direction, a force proportional to the static pressure sampled upstream of the apparatus,

in the closing direction, a force proportional to the static pressure sampled in the convergent, and

a force compensating the force proportional to the static pressure sampled upstream.

3. Apparatus according to Claim 2, characterized in that it also possesses means (121, 221) for selectively preventing the static pressure sampled in the convergent from being transmitted to the shutter and for exerting simultaneously on the shutter:

in the closing direction, a force proportional to the static pressure sampled upstream of the apparatus, and

in the opening direction, a force proportional to the static pressure sampled downstream of the apparatus, so as to cause the upstream and downstream zones of the latter to be isolated from one another.

4. Apparatus according to either one of Claims 2 and 3, characterized in that the regulating valve comprises, inside a sealed housing (113, 114):

a diffuser (115) equipped with a cage (117) which is provided with a plurality of radial orifices in several axially tiered planes;

a shutter (119) for this diffuser, which as a result of an axial movement makes it possible to cover a greater or lesser number of orifices of the cage, so as to vary the flow of the fluid passing through the diffuser;

means (120, 140) for connecting to the upstream static-pressure sampling point a first chamber (125) which increases in volume in the opening direction;

means (109, 133) for connecting to the variable static-pressure sampling point of the convergent a second chamber (127) which increases in volume in the closing direction.

5. Apparatus according to any one of Claims 2 to 4, characterized in that the means for exerting a compensating force on the shutter comprise a spring (129) which exerts a force transmitted to the shutter in the closing direction.

6. Apparatus according to either one of Claims 4 and 5, characterized in that the means for connecting the first chamber to the upstream static-pressure sampling point also include at least one calibrated orifice (131).

7. Apparatus according to any one of Claims 1 to 6, characterized in that the nozzle possesses at least one line of peripheral pressure-sampling points (102) arranged at intervals along the convergent (101) and each connected to the inlet of a multi-way distributor (109) controlled by the actuation means in response to the correction signal supplied by the regulating means.

8. Apparatus according to Claim 7, characterized in that the nozzle possesses a plurality of pressure-sampling lines, and all the pressure-sampling points located at one and the same level in the convergent communicate with an annular chamber (103) which is itself connected to one of the inlets of the multi-way distributor.

9. Apparatus according to any one of Claims 1 to 6, characterized in that it possesses means for moving the convergent (203) relatively inside the body (201, 202, 201') of the nozzle in relation to a single static-pressure sampling point (208), these means for relative movement being controlled by the actuation means in response to the correction signal supplied by the regulating means.

10. Apparatus according to Claim 9, characterized in that the means for moving the convergent relative to the static-pressure sampling point comprise a magnetic coupling on either side of a non-magnetic wall (202) of the nozzle body.

11. Apparatus according to Claim 10, characterized in that the magnetic coupling comprises:

outside the nozzle body, a motor (219) for driving at least one first permanent magnet (217) in rotation,

inside the nozzle body, at least one second permanent magnet (210) interacting with the first and driving a mechanism (212) for converting the rotational movement into an axial translational movement of the convergent relative to the pressure-sampling point.

12. Apparatus according to any one of Claims 3 to 11, characterized in that the regulating valve comprises, inside a sealed housing (113).

an isolating flap (149) which is separate from the shutter (119) and the movement of which causes the regulating valve to open and close;

means (153) for connecting to the upstream static-pressure sampling point of the apparatus a first chamber (150), the increase in volume of which causes the flap (149) to move in the opening direction;

means (133') for connecting to the variable static-pressure sampling point of the convergent a second chamber (127') which increases in volume in the closing direction;

means (154) of connecting to a downstream static-pressure sampling point of the apparatus a third chamber (151), the increase in volume of which causes the flap (149) to move in the closing direction; and, outside the said housing,

means (152) for interchanging the static pressures of the first and third chambers (150, 151);

means (121') for selectively preventing the static pressure sampled in the convergent from being transmitted to the second chamber (127'), for exerting, on the shutter, in the opening direction, a force proportional to the static pressure sampled upstream of the apparatus, and for exerting a force proportional to the static pressure sampled downstream of the apparatus on it in the closing direction, so that the shutter only covers some of the orifices in the cage when the flap (149) closes the regulating valve.

13. Apparatus according to any one of Claims 4 to 12, in which a single nozzle is connected in series with the regulating valve, characterized in that the radial orifices in the cage have a cross-section which decreases when moving in the opposite direction to the flow, following the axis of the cage.

14. Apparatus according to Claim 1, characterized in that the shutter of the regulating valve (VR) forms an isolating flap (149'), the movement of which causes the regulating valve to open and close, and in that there are also:

means for connecting to a static-pressure sampling point upstream of the apparatus a first chamber (150'), the increase in volume of which causes the flap to move in the opening direction,

means for connecting to a static-pressure sampling point downstream of the apparatus a second chamber (151'), the increase in volume of which causes the flap to move in the closing direction,

means for interchanging the static pressures of the first and second chamber,

means for damping the movement of the flap (149') by throttling the flow of the fluid feeding the chambers (150', 151'), as a result of the calibration of the feed channels (153', 154') of the latter.

FIG_1

0 120 773

FIG. 2

FIG. 5

3

FIG.3

0 120 773

FIG_4

# FIG_6

# FIG_7

FIG.8

0 120 773